(19) Europäisches Patentamt European Patent Office Office européen des brevets

(11) **EP 3 084 018 B1**

(12) **EUROPEAN PATENT SPECIFICATION**

(45) Date of publication and mention of the grant of the patent:
**06.02.2019 Bulletin 2019/06**

(21) Application number: **14825163.0**

(22) Date of filing: **16.12.2014**

(51) Int Cl.:
*C22B 1/20* (2006.01)    *C22B 7/02* (2006.01)
*C22B 23/02* (2006.01)

(86) International application number:
**PCT/FI2014/051004**

(87) International publication number:
**WO 2015/092132 (25.06.2015 Gazette 2015/25)**

(54) **METHOD FOR EXPLOITING DUSTS GENERATED IN A FERRONICKEL PROCESS**

VERFAHREN ZUR NUTZUNG VON IN EINEM FERRONICKELVERFAHREN ERZEUGTEN STÄUBEN

PROCÉDÉ D'EXPLOITATION DE POUSSIÈRES PRODUITES AU COURS D'UN PROCESSUS AU FERRONICKEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2013 FI 20136274**

(43) Date of publication of application:
**26.10.2016 Bulletin 2016/43**

(73) Proprietor: **Outotec (Finland) Oy**
**02230 Espoo (FI)**

(72) Inventors:
- **KROGERUS, Helge**
  **FI-28100 Pori (FI)**
- **MÄKELÄ, Pasi**
  **FI-28430 Pori (FI)**
- **KIVINEN, Visa**
  **FI-02810 Espoo (FI)**

(74) Representative: **Papula Oy**
**P.O. Box 981**
**00101 Helsinki (FI)**

(56) References cited:
EP-A1- 1 927 667    WO-A1-2012/172168
GB-A- 1 443 511

- **ALEXOPOULOU I E: "THE DUST RECYCLING PROBLEM OF THE FENI-PRODUCTION AT LARYMNA/GREECE. ÖPART 1: OPERATIONAL AND EXPERIMENTAL RESULTS", ERZMETALL, GMBD - MEDIENVERLAG, CLAUSTHAL-ZELLERFELD, DE, vol. 47, no. 9, 1 September 1994 (1994-09-01), pages 562-571, XP000471458, ISSN: 0044-2658**
- **LAMPROPOULOU P G ET AL: "AGGLOMERATION OF DUST AND SLUDGE OF THE FENI PRODUCTION//AGGLOMERIERUNG VON STAEUBEN UND SCHLAEMMEN AUS DER FENI-ERZEUGUNG//L'AGGLOMERATION DES POUSSIERES ET BONES OBTENUES DANS LA PRODUCTION DU FENI", ERZMETALL, GMBD - MEDIENVERLAG, CLAUSTHAL-ZELLERFELD, DE, vol. 56, no. 9, 1 January 2003 (2003-01-01), pages 551-557, XP001177299, ISSN: 0044-2658**
- **IMANISHI NOBUYUKI ET AL: "Pelletizing of nickel residue from laterite for direct reduction process", INTERNATIONAL JOURNAL OF MINERAL PROCESSING, ELSEVIER SCIENCE PUBLISHERS, AMSTERDAM, NL, vol. 19, no. 1-4, 30 April 1985 (1985-04-30), pages 115-126, XP009504447, ISSN: 0301-7516, DOI: 10.1016/0301-7516(87)90035-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The invention relates to a method for exploiting dusts generated in a ferronickel process.

**BACKGROUND**

Nickel-bearing laterite ores, which are used as the main mineral raw material in ferronickel process, are friable and dusty in character. The nickel content of laterites is usually between 0.95 and 3 w-%. Therefore, large amounts of ore material need to be handled in the ferronickel process. The slag to metal ratio in smelting is high, generally even over 10. Consequently, the electricity consumption of the ferronickel process is high.

Laterite ores contain high amounts of different types of volatile compounds, in general over 10 w-%. One of the volatile compounds is goethite, the structure of which also contains nickel and hydrated silicates of Mg and (Mg, Al). Nickel can also be present in the magnesium silicates. Further, laterite ores also contain 10-20 w-% moisture depending on the deposit location.

The ferronickel process starts with crushing and screening of the ore, in which connection finely divided ore dust is produced. Today, this dust is mainly stored in heaps, and only a minor part of dust is exploited in the ferronickel process.

Crushed and screened ore is first fed into a drying drum, where part of the ore's moisture content is removed. At this point, a small amount of wet dust is produced. At present the utilization of wet dust is difficult and non-efficient.

From the drying drum the ore is fed to a rotary kiln where final drying and calcination of the ore and pre-reduction of nickel and iron take place. Due to the high crumbling tendency of the ore, lots of finely divided material and dust are produced from the ore at this stage.

The amount of finely divided material removed from the rotary kiln is generally over 20 % of the weight of the ore fed to the rotary kiln. The dusts from the rotary kiln are first separated in a dry cyclone and then in a wet scrubber.

The grain size of both the cyclone dust and the scrubber dust is very small, usually less than 50 $\mu$m. The specific surface of the dust is high due to the high porosity of dust particles.

The amount of dust produced in the ferronickel process is substantial and the nickel content in the dust is higher than in the original ore because the dusts are mostly calcined. The dusts also contain carbon which originates from coal that has been used as a reducing agent in the rotary kiln. Substantial amounts of nickel are bound to these dusts. At present the exploitation of nickel which is bound to these dusts is at a very low level due to several difficulties in the dust handling. In an article by Alexopoulou, I. E. et al., "The dust recycling problem of the FeNi-production at Larymna/Greece. Part 1: Operational and experimental results" (Erzmetall vol. 47, no. 9, 1994, pp. 562-571), an experimental method for recycling dusts in a sinter process is disclosed.

**PURPOSE**

The purpose of the present method is to eliminate, or at least reduce the problems of the prior art.

More precisely, the purpose of the present method is to provide a new method for exploitation of nickel-bearing dusts formed in a ferronickel process.

**SUMMARY**

More precisely, the now presented method comprises producing a pelletizing feed from dusts of the ferronickel process and from finely divided laterite ore with a particle size less than 3 mm, after which the pelletizing feed is pelletized to produce green pellets. The green pellets are sintered in a steel belt sintering furnace to produce sintered pellets. The steel belt sintering furnace comprises one or more zones for drying, heating, sintering and cooling the pellets. Finally, the sintered pellets are fed either to a rotary kiln for pre-reduction of nickel and iron or to a ferronickel smelter together with pre-reduced laterite ore received from a rotary kiln.

The steel belt sintering (SBS) process of Outotec can be used for the sintering.

According to one embodiment the particle size of the finely divided laterite ore is less than 2 mm.

According to one embodiment, dust from a dry cyclone cleaner and/or dust from a wet scrubber can be introduced into the pelletizing feed.

According to one embodiment, the amount of finely divided laterite ore introduced into the pelletizing feed is 0.1-50%, preferably 1-45%, more preferably 5-40% of the weight of the pelletizing feed. It seems based on performed tests (described later herein) that an addition of finely divided laterite ore (crushed ore) clearly improved the strength values of the pellets. It appears easier to produce durable pellets from nickeliferous process dusts by adding at least a small amount of finely divided laterite ore.

According to one embodiment, bentonite is added to the pelletizing feed in an amount of 0.1-2%, or alternatively 0.1-1.5%, preferably 0.5-1.2% of the weight of the pelletizing feed. It seems based on performed tests (described later herein) that an addition of bentonite improves the strengths of pellets.

According to one embodiment, the temperature of the drying gas supplied into the drying zone of the steel belt sintering furnace is 100-500°C and the retention time in the drying zone is 10-15 minutes. Alternatively, the temperature of the drying gas supplied into the drying zone of the steel belt sintering furnace can be 250-420°C and the retention time in the drying zone can be 10-12 minutes. Also a temperature of 300-420°C could be used.

According to one embodiment, the temperature of the heating gas supplied into the heating zone of the steel belt sintering furnace is 1000-1300° C and the retention time in the heating zone is 8-15 minutes. Alternatively the temperature of the heating gas supplied into the heating zone of the steel belt sintering furnace can be 1100-1200° C and the retention time in the heating zone can be 9-11 minutes.

According to one embodiment, the temperature of the sintering gas supplied into the sintering zone of the steel belt sintering device is 1150-1350° C and the retention time in the sintering zone is 10-16 minutes. Alternatively the temperature of the sintering gas supplied into the sintering zone of the steel belt sintering device can be 1200-1250° C and the retention time in the sintering zone can be 10-16 minutes.

According to one embodiment, the temperature of the material bed in the sintering zone is in the range of 1300-1500° C. Alternatively the temperature of the material bed in the sintering zone can be in the range of 1360-1400° C.

Sintered nickel-containing pellets produced by a method presented herein can have nickel content even higher than 2% and have an apparent porosity of 20-40%. In some cases the sintered pellets can have nickel content higher than 4%. The Fe/Ni ratio of the sintered pellets can be lower than 10.0, preferably lower than 5. Alternatively, the Fe/Ni ratio of the sintered pellets can be lower than 5.0, preferably lower than 4.8. The apparent porosity of the pellets can be 20%-35%, preferably 25-30%.

Producing sintered pellets from ore fines and dust generated in a ferronickel process enables more efficient exploitation of waste materials which have earlier been stored in heap.

Sintered pellets can be fed into a rotary kiln for pre-reduction before smelting. Alternatively, sintered pellets can be fed to smelting together with pre-reduced laterite ore received from a rotary kiln.

The new method enables cost-effective utilization of ferronickel dusts which previously have been stored in heaps.

The method is environmental friendly in that it enables exploitation and recycling of waste materials (the dust produced in the ferronickel process).

## DETAILED DESCRIPTION

Laterite ores are very friable and lots of fines and dust are formed during their handling. The amount of nickel in these fines and dusts is remarkable and valuable. The pelletizing and sintering of the mixtures of fine ore and dusts have been clarified in the laboratory and pilot plant scales. Pelletizing and sintering were investigated using a pelletizing disc and a batch reactor (certain type pot furnace) which simulated the real process. The target was to use a steel belt sintering machine for the sintering of the pellets. The temperature profiles and retention times in different zones of steel belt sintering machine were specified to reach sintered pellets suitable for smelting.

In the first set of experiments, only dusts from dry cyclone cleaners and wet scrubbers were used in different proportions as a raw material. In the second set of experiments, dry and wet dusts were mixed with finely divided ore in different proportions. Finely divided ore with a particle size less than 2 mm was added to the mixture in an amount up to 50 w-%. Finely divided ore with a particle size less than 3 mm can be used as an alternative. In some of the test results shown herein finely divided ore with a particle size less than 2 mm was added to the mixture in an amount of 30 w-%.

Chemical analysis of the raw materials used in the tests is shown in Table 1. The composition of dry cyclone fines and wet scrubber slime was quite similar. Both the cyclone fines and the scrubber slime contained more nickel and total iron ($Fe_{tot}$) than the laterite ore. The loss of ignition (L.O.I.) and moisture content was lower in the dusts than in the laterite ore.

**TABLE 1** Chemical analysis of ore and dusts

| Component | Laterite ore | Cyclone fines | Scrubber slime |
|-----------|--------------|---------------|----------------|
| Ni | 2.6 | 4.3 | 4.4 |
| $Fe_{tot}$ | 14.1 | 20.8 | 21.6 |
| $Fe^{2+}$ | 2.5 | 3.1 | 2.7 |

(continued)

| Component | Laterite ore | Cyclone fines | Scrubber slime |
|---|---|---|---|
| MgO | 17.6 | 14.3 | 14.5 |
| $Al_2O_3$ | 1.7 | 3.3 | 3.3 |
| $SiO_2$ | 50.4 | 47.7 | 44.8 |
| L.O.I. | 9.4 | 2.4 | 2.4 |
| moisture | 10.4 | 2.9 | 4.0 |

The ore was crushed and screened to reach a particle size less than 2 mm. The grain size of the cyclone dust and scrubber slime was less than 50 μm and less than 44 μm, respectively. The dusts were received from the gas cleaning of a rotary kiln.

Bentonite was added as a binding agent into the pelletizing feed. The amount of bentonite was 0.1-1.0% of the dry weight of the feed. The amount of coke or other carbon-bearing material added to the pelletizing feed was 0-2% depending of the carbon content of the dusts.

The moisture content of the wet pellets was 19-21% because of the very fine grain size and high porosity of the pellets produced. The cold compressive strength of wet pellets was 1.3-2.0 kg/pellet of 12 mm diameter. The cold compressive strength generally refers to the compressive strength when the pellet is cooled, i.e. when it is a room temperature (e.g. 16°C, 20°C or 24°C). After drying the cold compressive strength of green pellets was 4-12 kg/pellet of 12 mm diameter. The green pellets were strong enough for sintering.

Sintering of green pellets was carried out in simulated steel belt sintering equipment. Process parameters were adjusted based on the composition of the sintering feed and the properties of the resulting product.

The compression strength of sintered pellets was in the range of 80-210 kg/pellet in different parts of the product bed. The diameter of the pellets was a little smaller than 12 mm because the pellets were a little bit compressed due to the high porosity of green pellets.

The results of chemical analysis of sintered pellets are shown in **Table 2**. The nickel content of sintered pellets was over 4 w-%. Iron ($Fe_{tot}$) was mainly present as $Fe^{3+}$. The Fe/Ni ratio was about 4.6 at its best.

In the steel belt sintering equipment the gas temperature in the drying stage was 250-420° C. The retention time in the drying stage was 10-12 minutes because of the high moisture content of the pellets.

**Table 2** Chemical analysis of the sintered pellets.

| Ni | $Fe_{tot}$ | $Al_2O_3$ | MgO | CaO | $SiO_2$ |
|---|---|---|---|---|---|
| 4.4 | 20.0 | 3.7 | 13.0 | 0.4 | 47.2 |

The temperature of heating gas supplied into the heating stage was 1100-1200° C. The retention time in the heating stage was 9-11 minutes. Product bed temperatures between 1270 and 1370° C could be reached in the heating stage, depending on the composition of the feed and the amount of combustible coal present.

The temperature of the sintering gas supplied into the sintering stage was 1200-1250° C. The retention time in the sintering stage was 10-16 minutes. The temperature of the bed was between 1360 and 1400° C during tests where pellets of good quality were produced.

Sintered pellets were highly porous. The apparent porosity of the pellets was in the range of 25-30%, which is why the reducibility of the pellets was good. In pre-reduction tests carried out at 800° C with CO gas and 5% coke in the mixture, the degree of nickel metallization was over 60% and the degree of iron metallization was over 40%.

The abrasion resistance of the pellets was high enough to withstand a further treatment in a rotary kiln followed by smelting, or just smelting together with pre-reduced laterite ore received from a rotary kiln.

To get a better understanding of the effectiveness and functioning of the process pelletizing and sintering tests in the pilot scale were performed. A description of the test is explained in the following. These test results verify functioning of the process and give the real basis for the designing of the commercial scale process.

Batch pelletizing tests were performed. The purpose of batch pelletizing was to study the pelletizing properties of a mixture of three different materials and the mixtures of them. The chemical analyses of the test materials were as shown herein in **Table 1** already.

Pelletizing was carried out on a disc with a diameter of 2.0 m and a depth of 0.30 m. The maximum rotation speed of the disc was 20 rpm. The ground laterite ores and dusts were mixed with a binding agent and fine coke in some tests. The mixing time was 10 minutes. A little water was added into the mixer in some tests.

The batch was fed manually onto the disc. The pelletizing feed was moistened with water sprayers according to the formation of the pellets. The pelletizing time was about 50-60 minutes. The desired size of the pellet (ie. diameter of the pellet) was 12 mm. The rotation speed of the disc was adjusted according to the formation of the pellets.

The quality of the green pellets was determined by measuring the cold compressive strengths of the green and dry pellets. The moisture content of the green pellets was also measured.

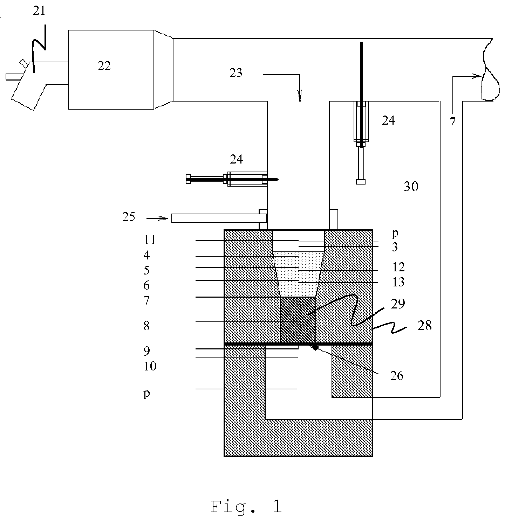

Batch sintering tests were performed using a batch sintering system illustrated in **Fig. 1** that included a gas (e.g. butane) burner 21, a burning or combustion chamber 22, a sintering reactor 28 and gas lines 23. The gas lines 23 were equipped with the water-cooled valves 24 for leading the combustion gases to the reactor 28 and the off-gases (or out-gases) via gas lines 27 to the gas cleaning system (not shown in the figure). 25 is an inlet for extra air for controlling the gas temperature.

The sintering process was controlled continuously by an automatic process control system. The reactor 28 includes a metal grate 26 and is lined with refractory and insulating castable mixes.

Fig. 1 shows the positions of several thermocouples installed inside the pellet bed to measure the temperatures during the sintering process. 3 and 11 indicate thermocouples of the feed gas, 4,5,7,12 and 13 indicate thermocouples of the pellet bed, 8 indicates a thermocouple of the protection layer, 9 indicates a thermocouple of the grate and 10 indicates a thermocouple of the off-gas. In the batch sintering tests, the temperature profiles inside the pellet bed during sintering were measured. These values give information on the sintering temperatures. Also there was a pressure drop during the test from the upper part towards the lower part of the sintering reactor.

Butane gas was burned with air or with oxygen enrichment, depending on the process stage. The batch sintering process comprised the following stages: i. drying with combustion gases, ii. heating with combustion gases using oxygen enrichment, iii. sintering with combustion gases using oxygen enrichment, and iv. cooling with air.

For each zone, the amount of gas and retention time was pre-selected. The temperature of the combustion gases was controlled by the amount of butane, air ratio and oxygen enrichment. The combustion gases entered the reactor from above. Cooling air 5 was ducted into the reactor from above. Moist pellets (the area indicated by reference 29, **Fig. 1**) were charged into the reactor on a bottom layer (the protective layer, indicated by reference 30) of the chromite sintered pellets. The weight of the moist pellets was about 15 - 18 kg.

The sintered pellets were discharged from the reactor after the program was finished and the system was cooled (to room temperature). The sintered pellet bed was divided into three different sections (upper, middle and lower layers) for laboratory tests. The bottom layer was changed after every test.

Chemical analysis of the raw materials used in the tests is shown in Table 1. The nickel contents of the cyclone dust and scrubber slurry are clearly higher than that of the ore as shown in Table 1. The dusts were almost totally calcined and thus their nickel content was high.

In some of the tests bentonite was used as binding material. Table 3 shows the chemical analysis of the bentonite used in the tests.

**Table 3 Chemical analysis of bentonite.**

| Volatiles % | $SiO_2$ [%] | $Al_2O_3$ [%] | MgO [%] | CaO [%] | S [%] | Na [%] | K [%] | $Fe_{-tot}$ [%] |
|---|---|---|---|---|---|---|---|---|
| 6.5 | 61.7 | 23.9 | 2.4 | 1.3 | 0.3 | 1.6 | 0.5 | 2.8 |

Chemical analysis of the fine coke used in pilot plant batch sintering tests is shown in Table 4.

**Table 4 Chemical analysis of fine coke.**

| Volatiles [%] | $C_{fix}$ | $Al_2O_3$ [%] | MgO [%] | CaO [%] | S [%] | $Na_2O$ [%] | $K_2O$ [%] | $Fe_{tot}$ [%] | $SiO_2$ [%] |
|---|---|---|---|---|---|---|---|---|---|
| 1.5 | 78.3 | 3.3 | 0.1 | 0.2 | 0.8 | 0.2 | 0.2 | 0.9 | 5.8 |

Table 5 shows the screen size of the Ni laterite ore.

The grain size of the original ore samples were below 25 mm and the average grain sizes were about 5 mm. The grain size of crushed ore was less than 2.38 mm and it contained 51.5 w-% less than $74\mu m$.

Both dusts were very fine and the measured specific surface areas were 16.14 $m^2$/g for cyclone dust and 35.05 $m^2$/g for scrubber slurry. The grain size of cyclone dust was less than $50\mu m$ and the average size $15\mu m$ and those of scrubber slurry were correspondingly $44\mu m$ and $4.6\mu m$.

**Table 5 Screen analysis of ore.**

| Screen size | | Ore , crushed | Ore, before crushing |
|---|---|---|---|
| [mesh] | [mm] | | |
| | 25.0 | | 100.00 |
| | 15.0 | | 94.99 |
| | 10.0 | | 85.53 |
| | 8.0 | | |
| | 6.73 | | |
| 4 | 4.76 | | 53.21 |
| 6 | 3.36 | | |
| 8 | 2.38 | 100.00 | 33.80 |
| 12 | 1.68 | 99.98 | |
| 16 | 1.19 | 99.95 | 19.58 |
| 20 | 0.841 | 98.75 | |
| 30 | 0.595 | 91.85 | 12.31 |
| 40 | 0.42 | 82.06 | |
| 50 | 0.297 | 73.47 | |
| 70 | 0.21 | 63.92 | |
| 100 | 0.149 | 57.44 | |
| 140 | 0.105 | | |
| 200 | **0.074** | **51.53** | |
| 270 | 0.053 | | |
| 325 | 0.044 | | |
| 400 | 0.037 | 43.85 | |

The screen analysis of the fine coke for the pelletising and sintering was as follows:

41 %    -74 $\mu$m
25 %    -37 $\mu$m

The grain size of bentonite was below 40$\mu$m.

Main phases of test materials are presented in Table 6.

**Table 6 Main phases of the test materials.**

| Phase | Laterite ore | Cyclone fines | Scrubber slurry |
|---|---|---|---|
| $Mg_3Si_2O_5(OH)_4$, clinochrysotile | X | | X |
| $(Mg,Al)_3(Si,Al)_2O_5(OH)_4$ lizardite | X | | |
| $(Mg_5Al)(Si,Al)_4O_{10}(OH)_8$ clinochlore | X | | |
| $SiO_2$, quartz | X | | X |
| $MgSiO_3$, enstatite | | X | X |
| FeOOH, goethite | X | | |
| $(Mg_{0.6}Fe_{0.4})_2SiO_4$, forsterite ferroan | X | | |

(continued)

| Phase | Laterite ore | Cyclone fines | Scrubber slurry |
|---|---|---|---|
| $NiFe_2O_4$, trevorite | | X | X |
| $Mg_2SiO_4$, forsterite | | X | X |
| $Fe_3O_4$, magnetite | | X | X |
| $Fe_2O_3$, hematite | | X | |

The grain structure of the ore was loose and plenty of breaks appeared. The grains also contained different phases. Therefore it is not durable against abrasion and substantial dust formation in the rotary kiln can be predicted.

The microstructure of the ore mainly consisted of different silicates and iron oxides. The dusts contained different calcined magnesium silicates, silica, magnetite and hematite. Nickel appeared as trevorite in the dusts.

Table 7 shows the tested batches and the moisture content of the wet pellets. As can be seen in some of the batches about 30% finely divided laterite or was added to the pelletizing feed.

**Table 7 Batch composition of the tests.**

| Batch number | Cyclone fines 1%] | Scrubber slurry 1%] | Bentonite [%] | Ore [%] | $C_{fix}$ [%] | Moisture [%] |
|---|---|---|---|---|---|---|
| 1 | 85 | 15 | 0.5 | | | 20.87 |
| 2 | 85 | 15 | 1.0 | | 1.0 | 21.0 |
| 3 | 85 | 15 | 1.0 | | 1.5 | 21.1 |
| 4 | 85 | 15 | 1.0 | | 1.5 | 20.7 |
| 5 | 85 | 15 | 1.0 | | 1.8 | 20.0 |
| 6 | 85 | 15 | 1.0 | | 1.8 | 20.0* |
| 7 | 85 | 15 | 1.0 | | | 21.0* |
| 8 | 85 | 15 | 1.0 | | | 19.0* |
| 9 | 85 | 15 | 1.0 | | | 20.0* |
| 10 | 85 | 15 | 1.0 | | | 19.0* |
| 11 | 85 | 15 | 1.0 | | | 20.0* |
| 12 | 85 | 15 | 1.0 | | 0.5 | 26.0* |
| 13 | 85 | 15 | 1.0 | | | 19.9* |
| 14 | 85 | 15 | 1.0 | | | 19.3* |
| 15 | 85 | 15 | 1.0 | | | 18.6* |
| 16 | 85 | 15 | 1.0 | | | 20.0* |
| **17** | **85** | **15** | **1.0** | | | **20.0*** |
| **18** | **85** | **15** | **1.0** | | | **20.0*** |
| 19 | 59.5 | 10.5 | 1.0 | 30 | | 18.3* |
| 20 | 59.5 | 10.5 | 1.0 | 30 | | 18.3* |
| **21** | **59.5** | **10.5** | **1.0** | **30** | | **18.3*** |
| **22** | **59.5** | **10.5** | **1.0** | **30** | | **18.3*** |

At first, pelletising tests were performed in the laboratory, but the strengths of the green pellets were too weak. Some pelletizing tests were carried out with a larger disc situated in the pilot plant. With the larger disc, it was easier to make compact and satisfactory strength of the pellets. This kind of effect is frequent when very light and fine materials are pelletized. The feed mixture and average strengths (wet and dry strengths) of the pelletizing pellets (a larger disc) are presented in Table 8. The amount of bentonite in these tests was 1 % and pre-wetting degree in a mixer was 5 %.

**Table 8 Batch composition, moisture content and wet and dry strength of the pellets.**

| Pelletizing test | Cyclone fines [%] | Scrubber slurry [%] | Laterite ore [1] [%] | Pellets moisture [%] | Wet strengths $F_{12}$ [2] kg/pellet | Dry strengths $F_{12}$ [2] kg/pellet |
|---|---|---|---|---|---|---|
| Example 1 | 85.0 | 15.0 | - | 20 | 1.2 | 3.0-5.0 |
| Example 2 | 59.5 | 10.5 | 30[1] | 21 | 1.5 | 7.0 |

where 1) crushed ore to - 2 mm 2) when the diameter of the pellet is 12 mm then

$$F_{12} = \left( \frac{12^2}{D^2} \right) * F_b$$

where D = the diameter of the measured pellet

$F_b$ = the compressive strength of the measured pellet

The wet and dry strengths of the pellets in the selected tests were high enough for the sintering process. It seemed that an addition of bentonite improved the strengths of pellets. An addition of crushed ore (of about 30%) clearly improved the strength values of the pellets. The moisture content in pelletizing of dusts was about 20 %.

The cold compressive strengths of the sintered pellets in the selected tests are presented in Table 9 (proportioned to 12 mm in diameter).

**Table 9 Cold compressive strength of the sintered pellets.**

| Test No | Strength, kg/pellet |
|---|---|
| 17 | 165 |
| 18 | 279 |
| 21 | 138 |
| 22 | 160 |

The strength of the sintered pellets was good in many tests when the process parameters were in the desired values. The strength was good both with fine dusts and with dusts with coarser crushed laterite ore. Good quality pellets were formed in the central area of the batch throughout the pellet bed (vertical). Close to the walls the pellets did not react enough due to about 100°C lower temperature than in the central area. This was due to the irregular radial temperature profile in the batch reactor. However, in a continuous process (such as the steel belt sintering (SBS) process of Outotec) the temperature at the edge areas are very even to central area temperatures, and thus should not have the drawbacks of the test reactor.

Fine coke was also added to the feed mixture in some tests and it resulted in metallic nickel formation. Then the reduction gases erupted from the pellets and caused fragmentation. Molten phases were also noticed on the surface of the pellets after the tests. After noticing these phenomena, no coke was further added to the feed mixture.

The chemical analyses of the two selected batches represent well the quality of the sintered pellets. The values are presented in Table 10 as w-%.

It should be noticed that the volatile components, ie. L.O.I (here hydroxides) have decomposed and removed from the pellets. Iron was well oxidized in these tests, with about 90 % of the iron was in ferric form.

**Table 10 Chemical analysis of the sintered pellets,**

| Batch number | Ni [%] | Fe [%] | $Al_2O_3$ [%] | MgO [%] | CaO [%] | $SiO_2$ [%] |
|---|---|---|---|---|---|---|
| 18 | 4.4 | 20.2 | 3.7 | 13.1 | 0.41 | 47.2 |
| 22 | 4.1 | 18.7 | 3.1 | 14.6 | 0.38 | 48.7 |

The porous structure of the pellets increases the reducibility of nickel and iron compared to the primary laterite ore. Nickel appeared to be in ferrite grains and in forsterite. Some ferrite particles were rich in nickel. The ferrites contained in points plenty of chromium.

Abrasion tests of sintered dust pellets resulted in considerably high amount of dust with a size of less than 0.59 mm. This result was not surprising, because of the earlier mentioned irregular temperature profile in the bed, and accordingly this should not be an issue in a continuous process. The pellets from the central area of the pellet bed have good abrasion resistance, which corresponds to the situation in a commercial scale.

Some physical values (porosity and density) of the sintered pellets from the tests are presented in Table 11.

**Table 11 Apparent porosity and density of the sintered pellets.**

| Batch No. | Apparent porosity [%] | Density [g/cm$^3$] |
|---|---|---|
| 18 | 29 | 2.6 |
| 22 | 25 | 2.5 |

The apparent porosity values were high and it advances the high reduction.

Pre-reduction tests of the sintered pellets were performed in a vertical tube furnace where coke and CO-gas were used as a reductant. This tube furnace simulated a vertical pre-reduction vessel. The furnace was equipped with a grate and gas flew upwards through the pellet bed. Three thermo elements were installed inside the bed at different heights from the top of the furnace.

The furnace was heated for two hours to 800°C and kept for two hours at this temperature. Then inert gas was led into the furnace and the heating current was switched off.

Sintered pellets were highly porous. The apparent porosity of the pellets was in the range of 25-30%, which is why the reducibility of the pellets was good.

In the pre-reduction tests carried out at 800°C with CO gas and 5% coke in the mixture the degree of nickel metallization was over 60% and the degree of iron metallization was over 40%.

The reduction rate can be increased by optimizing the conditions. The structure of the pre-reduced pellet was dense enough for subsequent handling and the disintegration was small.

In the test with the equipment shown in Fig. 1 the retention time 12 min in the drying zone was long enough for these wet pellets without any disintegration. The retention times in preheating was 9 - 10.5 min, and especially in sintering was 12 - 15 min, and these also varied according to the test results and the visual observations.

A feed gas temperature of max 420 - 440°C was found suitable for drying the pellets. The boundary layer between the fresh and bottom pellets was also dried.

The maximal feed gas temperature in the preheating zone was 1130 - 1190°C, depending on the retention time. The maximal temperature of the upper bed was then in the range of 1300°C - 1370°C. The maximal temperature of the middle part of the bed was 1270 - 1370°C. The temperature of the boundary layer was 1270°C - 1330°C.

The maximal feed gas temperature in the sintering zone was 1200 - 1230°C. Then the maximal temperature of the upper bed was 1370 - 1400°C. The maximal temperature of the middle part of the bed was 1360 - 1380°C. The temperature of the boundary layer was 1360 - 1370°C.

In a real continuous process also other values can be used (other than those used in the test) that have been presented herein.

It is obvious to a person skilled in the art that with the advancement of technology, the basic idea of the method presented herein may be implemented in various ways. The method and its embodiments are thus not limited to the examples described above; instead the method may vary within the scope of the claims.

**Claims**

1.  A method for exploiting dusts generated in a ferronickel process, comprising the steps of:

    - producing a pelletizing feed from dusts of the ferronickel process,
    - pelletizing the pelletizing feed to produce green pellets, and
    - sintering the green pellets,

    **characterized by**

    - introducing finely divided laterite ore with a particle size less than 3 mm into the pelletizing feed,
    - sintering the green pellets in a steel belt sintering furnace to produce sintered pellets, the steel belt sintering furnace comprising one or more zones for drying, heating, sintering and cooling of the pellets, and
    - feeding the sintered pellets to a rotary kiln for pre-reduction of nickel and iron, or to a ferronickel smelter together with pre-reduced laterite ore received from a rotary kiln.

2. A method according to claim 1, wherein the particle size of the finely divided laterite ore is less than 2 mm.

3. A method according to claim 1 or 2, wherein dust from a dry cyclone cleaner and/or slime from a wet scrubber are introduced into the pelletizing feed.

4. A method according to claim 1 or 2, wherein the amount of finely divided laterite ore is 0.1-50%, preferably 1-45%, more preferably 5-40% of the weight of the pelletizing feed.

5. A method according to any one of claims 1 to 4, wherein bentonite is added to the pelletizing feed in an amount of 0.1-2%, preferably 0.5-1.2% of the weight of the pelletizing feed.

6. A method according to any one of claims 1 to 4, wherein bentonite is added to the pelletizing feed in an amount of 0.1-1.5%, preferably 0.5-1.2% of the weight of the pelletizing feed.

7. A method according to any one of claims 1 to 6, wherein the temperature of the drying gas supplied into the drying zone is 100-500° C and the retention time in the drying zone is 10-15 minutes.

8. A method according to any one of claims 1 to 6, wherein the temperature of the drying gas supplied into the drying zone is 250-420° C and the retention time in the drying zone is 10-12 minutes.

9. A method according to any one of claims 1 to 8, wherein the temperature of the heating gas supplied into the heating zone is 1000-1300° C and the retention time in the heating zone is 8-15 minutes.

10. A method according to any one of claims 1 to 8, wherein the temperature of the heating gas supplied into the heating zone is 1100-1200° C and the retention time in the heating zone is 9-11 minutes.

11. A method according to any one of claims 1 to 10, wherein the temperature of the sintering gas supplied into the sintering zone is 1150-1350° C and the retention time in the sintering zone is 10-16 minutes.

12. A method according to any one of claims 1 to 10, wherein the temperature of the sintering gas supplied into the sintering zone is 1200-1250° C and the retention time in the sintering zone is 10-16 minutes.

13. A method according to any one of claims 1 to 12, wherein the temperature of the product bed in the sintering zone is in the range of 1300-1500° C.

14. A method according to any one of claims 1 to 12, wherein the temperature of the product bed in the sintering zone is in the range of 1360-1400° C.

**Patentansprüche**

1. Verfahren zum Verwerten von Stäuben, die in einen Ferronickelverfahren erzeugt werden, umfassend folgende Schritte:

   - Erzeugen einer Pelletisierungsbeschickung aus Stäuben des Ferronickelprozesses,
   - Pelletisieren der Pelletisierungsbeschickung, um grüne Pellets zu erzeugen, und
   - Sintern der grünen Pellets, **gekennzeichnet durch**
   - Einführen von fein zerteiltem Laterit-Erz mit einer Teilchengröße von weniger als 3 mm in die Pelletisierungsbeschickung,
   - Sintern der grünen Pellets in einem Stahlband-Sinterofen zur Erzeugung von gesinterten Pellets, wobei der Stahlband-Sinterofen eine oder mehrere Zonen zum Trocknen, Erwärmen, Sintern und Kühlen der Pellets aufweist, und
   - Zuführen der gesinterten Pellets an einen Drehofen zur Vorreduktion von Nickel und Eisen oder an eine Ferronickelschmelze zusammen mit vorreduziertem, aus einem Drehrohrofen erhaltenen Laterit-Erz.

2. Verfahren nach Anspruch 1, wobei die Teilchengröße des fein zerteilten Laterit-Erzes weniger als 2 mm beträgt.

3. Verfahren nach Anspruch 1 oder 2, wobei Staub aus einem Trockenzyklonreiniger und/oder Schlamm aus einem Nassreiniger in die Pelletisierungsbeschickung eingeführt wird.

4. Verfahren nach Anspruch 1 oder 2, wobei die Menge von fein zerteiltem Laterit-Erz 0,1 bis 50%, vorzugsweise 1 bis 45%, bevorzugter 5 bis 40% des Gewichts der Pelletisierungsbeschickung beträgt.

5. Verfahren nach einem der Ansprüche 1 bis 4, wobei Bentonit in einer Menge von 0,1 bis 2%, vorzugsweise 0,5 bis 1,2% des Gewichts der Pelletisierungsbeschickung zu der Pelletisierungsbeschickung zugegeben wird.

6. Verfahren nach einem der Ansprüche 1 bis 4, wobei Bentonit in einer Menge von 0,1 bis 1,5%, vorzugsweise 0,5 bis 1,2% des Gewichts des Pelletisierungsbeschickung zu der Pelletisierungsbeschickung zugegeben wird.

7. Verfahren nach einem der Ansprüche 1 bis 6, wobei die Temperatur des Trocknungsgases, das in die Trocknungszone eingeführt wird, 100-500°C beträgt und die Verweilzeit in der Trocknungszone 10-15 Minuten beträgt.

8. Verfahren nach einem der Ansprüche 1 bis 6, wobei die Temperatur des Trocknungsgases, das in die Trocknungszone eingeführt wird, 250-420°C beträgt und die Verweilzeit in der Trocknungszone 10 bis 12 Minuten beträgt.

9. Verfahren nach einem der Ansprüche 1 bis 8, wobei die Temperatur des Heizgases, das in die Heizzone eingeführt wird, 1000-1300°C beträgt und die Verweilzeit in der Heizzone 8-15 Minuten beträgt.

10. Verfahren nach einem der Ansprüche 1 bis 8, wobei die Temperatur des Heizgases, das in die Heizzone eingeführt wird, 1100-1200°C beträgt und die Verweilzeit in der Heizzone 9-11 Minuten beträgt.

11. Verfahren nach einem der Ansprüche 1 bis 10, wobei die Temperatur des Sintergases, das in die Sinterzone eingeführt wird, 1150-1350°C beträgt und die Verweilzeit in der Sinterzone 10-16 Minuten beträgt.

12. Verfahren nach einem der Ansprüche 1 bis 10, wobei die Temperatur des Sintergases, das in die Sinterzone eingeführt wird, 1200-1250°C beträgt und die Verweilzeit in der Sinterzone 10-16 Minuten beträgt.

13. Verfahren nach einem der Ansprüche 1 bis 12, wobei die Temperatur des Produktbetts in der Sinterzone in dem Bereich von 1300 bis 1500°C liegt.

14. Verfahren nach einem der Ansprüche 1 bis 12, wobei die Temperatur des Produktbetts in der Sinterzone im Bereich von 1360 bis 1400°C liegt.


**Revendications**

1. Procédé d'exploitation des poussières générées dans un procédé de ferronickel, comprenant les étapes suivantes :

   - la production d'une alimentation de granulation à partir des poussières du procédé de ferronickel,
   - la granulation de l'alimentation de granulation pour produire des granulés verts, et
   - le frittage des granulés verts,

   **caractérisé par**

   - l'introduction d'un minerai de latérite finement divisé ayant une taille particulaire inférieure à 3 mm dans l'alimentation de granulation,
   - le frittage des granulés verts dans un four de frittage à courroie d'acier pour produire des granulés frittés, le four de frittage à courroie d'acier comprenant une ou plusieurs zones pour sécher, chauffer, fritter et refroidir les granulés, et
   - l'introduction des granulés frittés dans un four rotatif pour la pré-réduction du nickel et du fer, ou dans un fondeur de ferronickel conjointement avec un minerai de latérite pré-réduit reçu à partir d'un four rotatif.

2. Procédé selon la revendication 1, dans lequel la taille particulaire du minerai de latérite finement divisé est inférieure à 2 mm.

3. Procédé selon la revendication 1 ou 2, dans lequel une poussière provenant d'un nettoyeur à cyclone sec et/ou une boue provenant d'un laveur humide sont introduites dans l'alimentation de granulation.

4. Procédé selon la revendication 1 ou 2, dans lequel la quantité de minerai de latérite finement divisé est de 0,1 à 50 %, de préférence de 1 à 45 %, de manière davantage préférée de 5 à 40 % du poids de l'alimentation de granulation.

5. Procédé selon l'une quelconque des revendications 1 à 4, dans lequel une bentonite est ajoutée à l'alimentation de granulation en une quantité de 0,1 à 2 %, de préférence de 0,5 à 1,2 % du poids de l'alimentation de granulation.

6. Procédé selon l'une quelconque des revendications 1 à 4, dans lequel une bentonite est ajoutée à l'alimentation de granulation en une quantité de 0,1 à 1,5 %, de préférence de 0,5 à 1,2 % du poids de l'alimentation de granulation.

7. Procédé selon l'une quelconque des revendications 1 à 6, dans lequel la température du gaz de séchage introduit dans la zone de séchage est de 100 à 500 °C et le temps de rétention dans la zone de séchage est de 10 à 15 minutes.

8. Procédé selon l'une quelconque des revendications 1 à 6, dans lequel la température du gaz de séchage introduit dans la zone de séchage est de 250 à 420 °C et le temps de rétention dans la zone de séchage est de 10 à 12 minutes.

9. Procédé selon l'une quelconque des revendications 1 à 8, dans lequel la température du gaz de chauffage introduit dans la zone de chauffage est de 1000 à 1300 °C et le temps de rétention dans la zone de chauffage est de 8 à 15 minutes.

10. Procédé selon l'une quelconque des revendications 1 à 8, dans lequel la température du gaz de chauffage introduit dans la zone de chauffage est de 1100 à 1200 °C et le temps de rétention dans la zone de chauffage est de 9 à 11 minutes.

11. Procédé selon l'une quelconque des revendications 1 à 10, dans lequel la température du gaz de frittage introduit dans la zone de frittage est de 1150 à 1350 °C et le temps de rétention dans la zone de frittage est de 10 à 16 minutes.

12. Procédé selon l'une quelconque des revendications 1 à 10, dans lequel la température du gaz de frittage introduit dans la zone de frittage est de 1200 à 1250 °C et le temps de rétention dans la zone de frittage est de 10 à 16 minutes.

13. Procédé selon l'une quelconque des revendications 1 à 12, dans lequel la température du lit de produit dans la zone de frittage est située dans la plage allant de 1300 à 1500 °C.

14. Procédé selon l'une quelconque des revendications 1 à 12, dans lequel la température du lit de produit dans la zone de frittage est située dans la plage allant de 1360 à 1400 °C.

Fig. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ALEXOPOULOU, I. E. et al.** Part 1: Operational and experimental results. *The dust recycling problem of the FeNi-production,* 1994, vol. 47 (9), 562-571